(19) Europäisches Patentamt

European Patent Office

Office européen des brevets

(11) Publication number: **0 142 880**
**B1**

(12) **EUROPEAN PATENT SPECIFICATION**

(45) Date of publication of patent specification: **19.07.89**

(51) Int. Cl.⁴: **B 65 H 5/30**

(21) Application number: **84201519.0**

(22) Date of filing: **19.10.84**

(54) Apparatus for separating sheets of soft material, sticking together.

(30) Priority: **20.10.83 NL 8303624**

(43) Date of publication of application:
**29.05.85 Bulletin 85/22**

(45) Publication of the grant of the patent:
**19.07.89 Bulletin 89/29**

(84) Designated Contracting States:
**AT BE CH DE FR GB IT LI LU NL SE**

(56) References cited:
**DE-A-1 817 030**
**FR-A-2 442 770**
**US-A-3 075 324**

(73) Proprietor: **Colpitt B.V.**
**Kamerlingh Onnestraat 40**
**NL-2041 CC Zandvoort (NL)**

(72) Inventor: **Vossen, Albertus Gerardus**
**Haarlemmerstraat 8**
**NL-2042 NC Zandvoort (NL)**

(74) Representative: **Mensen, Herbert, Ir. et al**
**Octrooibureau Polak & Charlouis Laan Copes**
**Van Cattenburch 80**
**NL-2585 GD Den Haag (NL)**

EP 0 142 880 B1

Courier Press, Leamington Spa, England.

## Description

The invention relates to a device for separating two superimposed sheets, more particularly for separating the walls of a flat folded bag made of a plastic foil or similar thin and flexible material, comprising two holding blocks mounted for displacement towards and away from one another and each cooperating with a separating jaw member which is mounted for movement from an inoperative position substantially transversal to the direction of movement of the blocks so as to engage a marginal edge portion of the respective sheet and hold the same against the respective holding block.

A device of this type is disclosed in FR-2.442.770. In this well-known device the walls of a flat folded bag are spread apart by means of rod members, which are designed to act upon an edge portion of one of the two bag walls, extended beyond the terminal edge of the second wall.

The device is unable to separate walls which have coinciding edges. As a consequence the holding blocks of this well-known device cannot be considered as cooperating so as to hold the walls to be separated without any further. Additional means are required to provisionally hold the flat folded bag in position. The holding function of the well-holding blocks is obtained only after the jaw members have arrived in the operative position relative to the respective blocks.

The invention aims at an improved device such that it will be capable of separating superimposed sheets which have coinciding edges and tend to stick together.

According to the present invention this aim is achieved in that the two holding blocks are positioned directly opposite to each other and adapted to hold the sheets to be separated between them, the two jaw members being formed and cooperating in such a way, that when displacing them from the inoperative position they engage along the plane of separation between the two sheets and constitute a wedge-like separation member adapted to engage the coinciding edge of the two sheets and splitting them apart, the wedge faces of the two jaw members cooperating with corresponding wedge faces recessed in the holding faces of the respective holding blocks.

In a preferred embodiment each of said separation jaw members is pivotally connected to the respective holding block.

In a practical embodiment those portions of said jaw members which are adapted to constitute said wedge-like separation member, are formed as finger-shaped penetration elements, which are spaced apart transversally to the penetration direction of the separation jaw members.

In order that the invention may be more fully understood, reference will now be made to the drawing accompanying this specification. In this drawing the apparatus according to the invention is shown in a number of positions being characteristic for various stages of the inventive method.

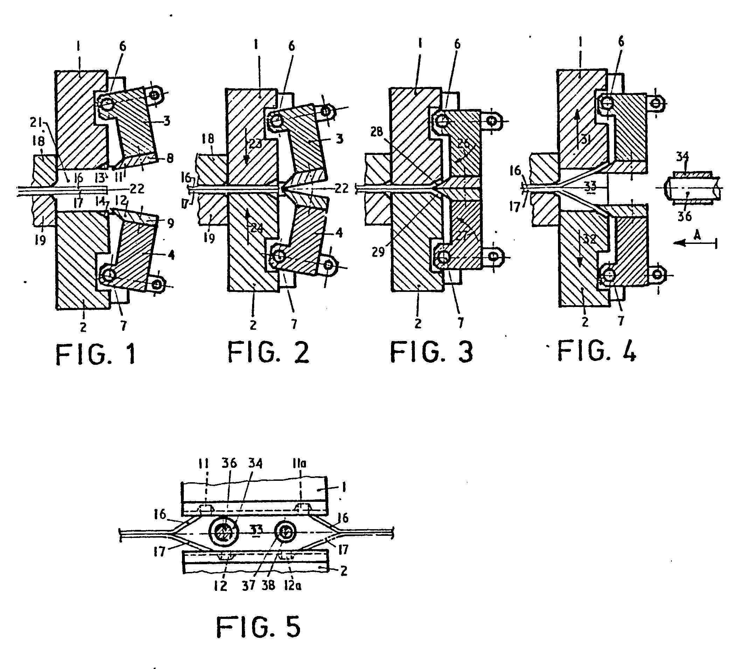

Figures 1-3 show the apparatus according to the invention in three stages of the method to be conducted therewith, viz.

in the starting position with opened claws of the positioning body and of the separating means;

in an intermediate position, in which the leading part of the bag is retained by the positioning blocks, but the separating means is just in front of the bag; and

in the closing position, in which the pointed ends of the separating means have already penetrated in-between the leading edges of the bag opening.

Fig. 4 shows a stage in which the blocks and claws are again moving apart, so that a wide opening is obtained, in which also blunt objects can be inserted; and

Fig. 5 is a side view of Fig. 4, seen in the direction of the arrow A.

The apparatus according to the invention includes a positioning body with blocks 1, 2 being mutually movable in a vertical direction, and a two-parts separating means 3, 4 being hingedly connected to these blocks of the positioning body, around axes 6, 7. The two separating parts 3, 4 are provided with one or more finger-shaped elements 8, 9, whose pointed extremities 11, 12 can cooperate with recesses 13, 14 in the blocks 1, 2.

In Fig. 1 the begin stage is shown, in which the two parts 1, 2 of the positioning body and those (3, 4) of the separating means are spaced a certain distance, so that a bag (16, 17) being clamped in the clamping means 18, 19, can be inserted in-between the blocks 1, 2.

In Fig. 2 the blocks 1, 2 and the parts 3, 4 of the separating means are moved together according to the arrows 23, 24 so that the part of the bag 16, 17 projecting outwards of the clamping means 18, 19, is fixed. The tips of the pointed extremities 11 and 12 approach each other in the separation plane 22. Thereafter the parts 3, 4 of the separating means are allowed to describe around the hinge axis 6, 7 part of a circle's arc, indicated with the arrows, 26, 27 (see Fig. 3). The pointed extremities 11, 12 have now penetrated between the edges 28, 29 of the bag 16, 17, so that these edges are overturned a little in the recesses 13, 14. Due to the fact that the mass of the parts 3, 4 of the separating means exerts, with respect to the hinge axis 6, 7, a moment, the pointed extremities of the fingers 8, 9 exert a horizontally directed force on the edges 28, 29, which since the greatest portion of the leading part of the bag is fixed, give way for that reason and are kept pressing against the blocks 1, 2.

When now the blocks 1, 2 again are moved apart according to arrows 31, 32, the layers 16, 17 of the bag are drawn far away from each other, so that a wide opening or gap 33 is created. Into that opening a blunt object such as a tube 34 being advanced over a core or mandrel 36, is easily inserted (Fig. 4).

In Fig. 5 a side view of Fig. 4 is shown. Note that the gap 33 has indeed also in the transverse direction large dimensions, so that next to the tube 34 another tube 37 slid over a core or mandrel 38, can be inserted.

## Claims

1. A device for separating two superimposed sheets, more particularly for separating the walls of a flat folded bag made of a plastic foil or similar thin and flexible material, comprising two holding blocks (1, 2) mounted for displacement towards and away from one another and each cooperating with a separating jaw member (3, 8; 4, 9) which is mounted for movement from an inoperative position substantially transversal to the direction of movement of the blocks (1, 2) so as to engage a marginal edge portion of the respective sheet and hold the same against the respective holding block, characterized in that the two holding blocks (1, 2) are positioned directly opposite to each other and adapted to hold the sheets to be separated between them, the two jaw members (3, 8; 4, 9) being formed and cooperating in such a way, that when displacing them from the inoperative position they engage along the plane of separation (22) between the two sheets (16, 17) and constitute a wedge-like separation member (11, 12) adapted to engage the coinciding edge (28, 29) of the two sheets (16, 17) and splitting them apart, the wedge faces of the two jaw members (3, 8; 4, 9) cooperating with corresponding wedge faces (13, 14) recessed in the holding faces of the respective holding blocks (1, 2).

2. A device according to claim 1, characterized in that each of said separation jaw members (3, 8; 4, 9) is pivotally connected to the respective holding block (1, 2).

3. A device according to either of claims 1-2, characterized in that those portions (8; 9) of said jaw members (3, 8; 4, 9) which are adapted to constitute said wedge-like separation member, are formed as finger-shaped penetration elements, which are spaced apart transversally to the penetration direction of the separation jaw members.

## Patentansprüche

1. Vorrichtung zum Trennen zweier aufeinander liegenden Blätter, insbesondere zum Trennen der Wandungen eines flach zusammengelegten, aus einer Kunststoffolie oder einem sonstigen dünnen und biegsamen Material geformten Sackes, versehen mit zwei gegen und auseinander beweglichen Halteblöcken (1, 2), die je mit einer Trennklaue zusammenarbeiten, welche aus einer unwirksamen Lage, etwa quer zur Bewegungsrichtung der Blöcke (1, 2), bewegt werden kann um einen Randteil des betreffenden Blattes zu greifen und denselben gegen den betreffenden Halteblock zu halten, dadurch gekennzeichnet, dass die beiden Halteblöcke (1, 2) einander gerade gegenüberliegen und geeignet sind die zu trennenden Blätter zwischen einander zu halten, wobei die beiden Klauen (3, 8; 4, 9) in der Weise gestaltet sind und miteinander zusammenarbeiten, dass sie bei einer Bewegung aus der unwirksamen Lage in der Trennungsebene (22) zwischen den beiden Blättern (16, 17) zusammentreffen und dabei ein keilförmiges Trennelement (11, 12) bilden, das die zusammenfallenden Ränder (28, 29) der beiden Blätter (16, 17) greifen kann um die Blätter zu spreizen, wobei die Keilflächen der beiden Klauen (3, 8; 4, 9) mit entsprechenden Keilflächen (13, 14) zusammenarbeiten, welche in den Halteflächen der betreffenden Halteblöcke (1, 2) ausgearbeitet sind.

2. Vorrichtung nach Anspruch 1, dadurch gekennzeichnet, dass jede Trennklaue (3, 8; 4, 9) gelenkig mit dem betreffenden Halteblock (1, 2) verbunden ist.

3. Vorrichtung nach Ansprüchen 1, 2, dadurch gekennzeichnet, dass diejenigen Teile (8; 9) der Trennklauen (3, 8; 4, 9), die das keilförmige Trennelement bilden, in Form fingerartiger Durchdringungselemente ausgeführt sind, die mit Abstand nebeneinander quer zur Durchdringungsrichtung der Klauen angeordnet sind.

## Revendications

1. Dispositif pour séparer deux feuilles superposées, en particulier pour séparer les parois d'un sac plié à plat et fabriqué d'une feuille plastique ou d'autre matière mince et flexible, comportant deux blocs de retenue (1, 2) montés de manière à pouvoir être écartes ou déplacés l'un vers l'autre et chaqu'un coopérant avec une griffe de séparation (3, 8; 4, 9) qui est montée d'une manière à pouvoir être déplacée d'une position inoperative en direction transversale par rapport au sens de mouvement desdites blocs (1, 2) pour saisir un bord de la feuille respective et presser ce dernier contre le bloc de retenue associé, caractérisé en ce que les deux blocs de retenue (1, 2) sont disposes l'un directement en face de l'autre et capables de retenir les feuilles à être séparées entre eux, les deux griffes (3, 8; 4, 9) étant formées et coopérant d'une telle manière qu'elles entrent, en exécutant un mouvement de ladite position inoperative, en contact l'une avec l'autre selon le plan de séparation entre les deux feuilles en constituant un élément cunéiforme adapté à entrer en contact avec les bords coincidants de ces feuilles (16, 17) et effectuer la separation de ces bords, les surfaces de cet élément cunéiforme coopérants avec des surfaces de coin correspondants ménagés dans les surfaces de retièn de ces blocs de retenue (1, 2).

2. Dispositif selon la revendication 1, caractérisé en ce que chaque griffe (3, 8; 4, 9) est reliée au bloc associé de manière pivotante.

3. Dispositif selon l'une ou l'autre des revendications 1-2, caractérisé en ce que les parties (8, 9) de cettes griffes (3, 8; 4, 9) qui constituent cet élément cunéiforme, sont agences de manière à former des doigts de pénétration, disposes l'un à coté de l'autre avec des intervalles en direction transversale par rapport au sens de pénétration des griffes de séparation.

FIG. 1  FIG. 2  FIG. 3  FIG. 4

FIG. 5

EP 0 142 880 B1